# EUROPEAN PATENT APPLICATION

(11) **EP 4 206 684 A1**
(43) Date of publication of application: **05.07.2023**
(21) Application number: 22217317.1
(22) Date of filing: 30.12.2022
(51) Int. Cl.: G01P 1/00, G01P 3/00

(54) **DEVICE FOR MEASURING ROTATING SPEED OF ELECTRIC MOTOR**

(30) Priority: 30.12.2021 CN 202123417245 U
(71) Applicant: Meritor Electric Vehicles Germany GmbH, 90441 Nürnberg (DE)
(72) Inventor: Lu, Cheng Shuai, 90441 Nürnberg (DE); Zhao, Han Wang, 90441 Nürnberg (DE)
(74) Representative: Whitfield, Jack Stephen

(57) **Abstract**

The present invention provides a device for measuring a rotating speed of an electric motor. The device includes: a speed sensor, an end cover, and a coupling. The coupling is provided with a first connection hole, and a rotating shaft of the electric motor is connected to the coupling by means of the first connection hole, so that the coupling is driven by the electric motor to rotate; the end cover is provided with a second connection hole, the coupling passes through the second connection hole of the end cover, the speed sensor is arranged on the end cover, and a probe of the speed sensor is oriented opposite a first planar surface of the coupling, at least one recess being distributed in the first planar surface of the coupling; and the speed sensor is used for detecting the recess distributed in the first planar surface of the coupling by means of the probe to determine the rotating speed of the electric motor by a change of magnetic signals in the speed sensor. According to the present solution, the accuracy of measurement of the rotating speed of the electric motor can be improved.

## Description

### Technical Field

The present invention relates to the technical field of measurement, and in particular to a device for measuring a rotating speed of an electric motor.

### Background Art

In the field of industrial technology, it is often necessary to measure and control the speed of equipment. For example, a rotating speed of a rotating shaft of an electric motor is measured to better control the rotating speed of the electric motor.

In measuring the rotating speed, a signal generator is usually used to transmit a signal, and then a feedback signal is received by a speed sensor for the purpose of measurement. However, the signal generator is usually fixed to a rotor by means of a part such as a bolt, and a long-time rotation easily causes the signal generator to become loose, so that the accuracy of measurement of the rotating speed of the electric motor is low.

### Summary of the Invention

The present invention provides a device for measuring a rotating speed of an electric motor, which can improve the accuracy of measurement of the rotating speed of the electric motor.

A device is provided for measuring a rotating speed of an electric motor. The device comprises a speed sensor; an end cover; and a coupling having a first connection hole. A rotating shaft of the electric motor is connected to the coupling by means of the first connection hole so that the coupling is driven by the electric motor to rotate. The end cover is provided with a second connection hole. The coupling passes through the second connection hole of the end cover. The speed sensor is arranged on the end cover. A probe of the speed sensor is oriented opposite a first planar surface of the coupling. At least one recess is distributed in the first planar surface of the coupling. The speed sensor is used for detecting the recess distributed in the first planar surface of the coupling by means of the probe to determine the rotating speed of the electric motor by a change of magnetic signals in the speed sensor.

The device may further comprise a sensor bracket. The sensor bracket may comprise a first planar bracket surface and a second planar bracket surface. The first planar bracket surface may comprise at least one first threaded hole. The second planar bracket surface may comprise a second threaded hole. The sensor bracket may be fixed to the end cover by means of the at least one first threaded hole. The speed sensor may be fixed to the sensor bracket by means of the second threaded hole.

An included angle may be formed between the first planar bracket surface and the second planar bracket surface. The included angle may enable the probe of the sensor to be oriented opposite the recess in the first planar surface of the coupling.

The end cover may further comprise an outer ring and an inner ring. The outer ring and the inner ring may be connected by means of at least one connection shaft. The sensor bracket may be fixed to the connection shaft by means of the second threaded hole.

At least one first fixing hole for fixing the end cover to the electric motor may be distributed in the outer ring of the end cover.

The coupling may further comprise a second planar surface. The second planar surface of the coupling may comprise at least one second fixing hole. The coupling may be connected to an external load by means of the second fixing hole. The external load may be equipment that needs to be driven by the coupling to operate.

The second planar surface of the coupling may comprise at least one toothed groove surface. The toothed groove surface may be configured to be coupled and fixed to a toothed groove surface on an external load. The external load may be equipment that needs to be driven by the coupling to operate.

An orifice of the first connection hole may be positioned in a tapered manner.

A material of the recess in the first planar surface of the coupling may comprise a high magnetic permeability material. A material of a projection on the first planar surface may comprise a low magnetic permeability material.

As can be seen from the above technical solution, the rotating shaft of the electric motor is connected by means of the first connection hole of the coupling, so that the rotating shaft of the electric motor can drive the coupling to rotate. The speed sensor is arranged on the end cover, and the probe of the speed sensor is oriented opposite the first planar surface of the coupling in which the recess is distributed. As such, since the recess is distributed in the coupling, when the electric motor drives the coupling to rotate, the recess is detected by the speed sensor, and signals obtained in the speed sensor change, so that the rotating speed of the electric motor can be further determined. It can be seen therefrom that in the present solution, no additional signal generator is needed to assist the speed sensor in rotating speed measurement, and the recess in the coupling can function as a signal generator. As such, by means of replacing the signal generator with the recess in the coupling, the problem that the signal generator is easily loosened due to rotation of the shaft can be solved, and the accuracy of measurement of the rotating speed of the electric motor can thus be improved.

### Brief Description of the Drawings

FIG. 1 is a schematic diagram of a device for measuring a rotating speed of an electric motor according to an embodiment of the present invention;
FIG. 2 is a schematic mounting diagram of a sensor bracket according to an embodiment of the present invention;
FIG. 3 is a schematic diagram of a sensor bracket according to an embodiment of the present invention;
FIG. 4 is a cross-sectional view of a device for measuring a rotating speed of an electric motor according to an embodiment of the present invention;
FIG. 5 is a schematic diagram of an end cover according to an embodiment of the present invention;
FIG. 6 is a schematic diagram of a coupling according to an embodiment of the present invention; and
FIG. 7 is a schematic diagram of a coupling according to another embodiment of the present invention.

### Detailed Description of Embodiments

As previously mentioned, in the field of industrial technology, it is often necessary to measure and control a speed of equipment. For example, a rotating speed of an electric motor is measured by a speed sensor to further better control the rotating speed of the electric motor.

Currently, the speed sensor is usually used to measure the rotating speed of the electric motor. However, when using the speed sensor, a signal generator that rotates with the electric motor is usually required. That is, the signal generator is mounted on a shaft that rotates with the electric motor so that the signal generator rotates with the electric motor. The rotating speed of the electric motor is measured by the speed sensor receiving a signal transmitted by the signal generator. However, since the signal generator is usually fixed to a rotating shaft or coupling by means of a bolt, the fixing of the signal generator will become loose during a long-time use, so that the rotating speed of the electric motor cannot be accurately measured by means of the sensor.

Based on this, in the present invention, it is contemplated to provide a recess in the coupling, replacing the function of the signal generator with the recess. As such, there will be no inaccurate measurement of the rotating speed by means of the sensor due to the looseness of the signal generator, which can improve the accuracy of measurement of the rotating speed of the electric motor.

A device for measuring a rotating speed of an electric motor provided by an embodiment of the present invention will be described in detail below with reference to the accompanying drawings.

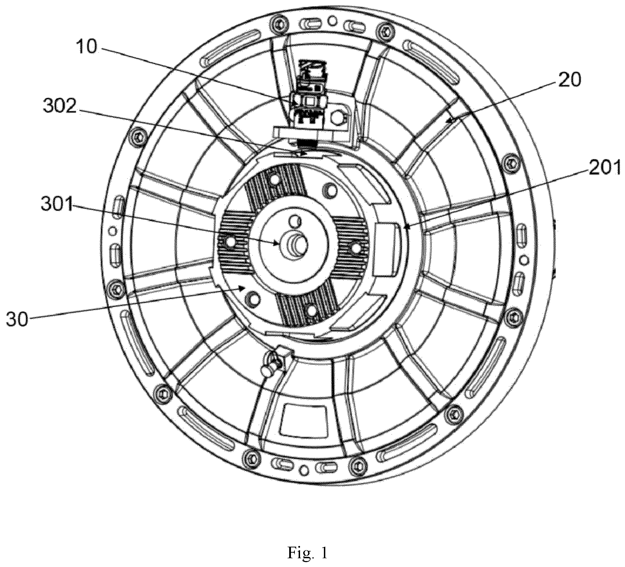

As shown in FIG. 1, the present invention provides a device for measuring a rotating speed of an electric motor, and the measuring device may include: a speed sensor 10, an end cover 20, and a coupling 30.

The coupling 30 is provided with a first connection hole 301, and a rotating shaft of the electric motor is connected to the coupling 30 by means of the first connection hole 301, so that the coupling 30 is driven by the electric motor to rotate.

The end cover 20 is provided with a second connection hole 201, the coupling 30 passes through the second connection hole 201 of the end cover 20, the speed sensor 10 is arranged on the end cover 20, and a probe of the speed sensor 10 is oriented opposite a first planar surface of the coupling 30. At least one recess 302 is distributed in the first planar surface of the coupling 30.

The speed sensor 10 is used for detecting the recess 302 distributed in the first planar surface of the coupling 30 by means of the probe 101 to determine the rotating speed of the electric motor by a change of magnetic signals in the speed sensor 10.

In an embodiment of the present invention, the coupling 30 is connected to the rotating shaft of the electric motor by means of the first connection hole 301, so that the coupling 30 can be driven to rotate together when the electric motor rotates. In addition, the coupling 30 passes through the second connection hole 201 of the end cover 20, and the first planar surface of the coupling 30 is opposite the probe of the speed sensor 10 mounted on the end cover 20, with the recess 302 being distributed in the first planar surface of the coupling 30. As such, when the electric motor drives the coupling 30 to rotate, the recess 302 distributed in the first planar surface is detected by the probe of the speed sensor 10, so that the rotating speed of the electric motor can be determined based on the change of the detected signals. It can be seen therefrom that in the present solution, instead of using a separate signal generator to assist the speed sensor 10 in rotating speed measurement, the recess 302 in the coupling 30 replaces the function of the signal generator. Since the coupling 30 itself rotates with the electric motor, there will be no inaccurate measurement results due to the loose mounting of the signal generator, which can improve the accuracy of measurement of the rotating speed of the electric motor.

In addition, since the present solution integrates the signal generator and the coupling 30 in principle, that is, the signal generator is designed as part of the coupling 30, no additional components of the signal generator are required. Therefore, the device for measuring the rotating speed of the electric motor provided by the present solution has a more reliable performance, and a simpler structure.

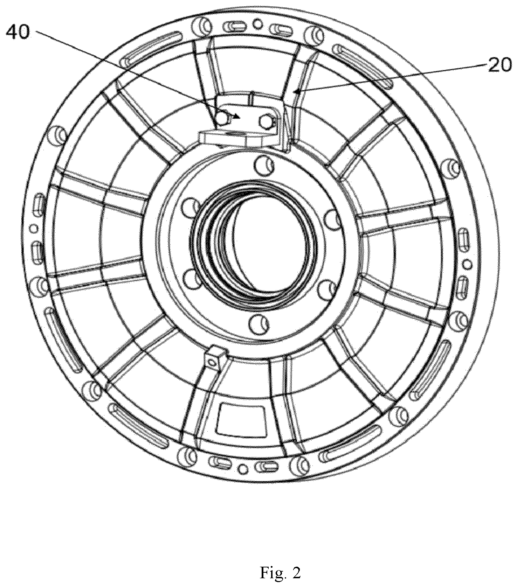

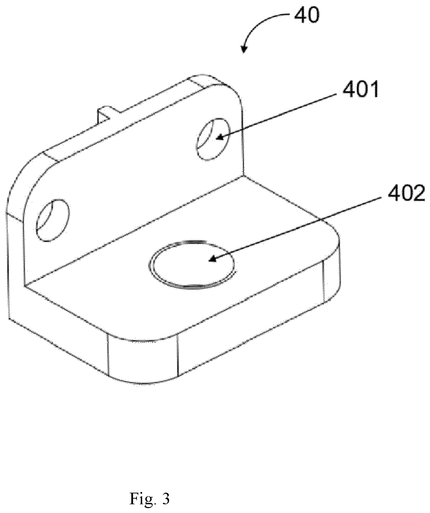

As shown above, the speed sensor 10 needs to be arranged on the end cover 20 to detect the recess 302 in the coupling 30. If the mounting of the speed sensor 10 is not stable enough, it will inevitably lead to inaccurate measurement results. Therefore, in order to improve the mounting stability of the speed sensor 10 and thus further improve the accuracy of measurement of the rotating speed of the electric motor, as shown in FIGS. 2 and 3, the device for measuring the rotating speed of the electric motor may further include a sensor bracket 40 to improve the mounting stability of the speed sensor 10 by the sensor bracket 40.

The sensor bracket 40 will be described in detail below.

The sensor bracket 40 may include a first planar bracket surface and a second planar bracket surface. The first planar bracket surface includes at least one first threaded hole 401. The second planar bracket surface includes a second threaded hole 402.

The sensor bracket 40 is fixed to the end cover 20 by means of the at least one first threaded hole 401, and the speed sensor 10 is fixed to the sensor bracket 40 by means of the second threaded hole 402.

It can be seen therefrom that in the present solution, it is contemplated that the sensor bracket 40 is provided with two planar surfaces, namely the first planar bracket surface and the second planar bracket surface, a plurality of first threaded holes 401 are provided in the first planar bracket surface, and a second threaded hole 402 is provided in the second planar bracket surface. As such, the sensor bracket 40 may be fixed to the end cover 20 by means of the plurality of first threaded holes 401, and the speed sensor 10 may also be fixed to the sensor bracket 40 by means of the second threaded hole 402, so that the mounting stability of the sensor can be improved. The first sensor bracket 40 may be fixed to the end cover 20 by means of bolts or screws. The speed sensor 10 may be provided with a thread and is fixed by coupling the thread with the second threaded hole 402 of the sensor bracket 40.

As shown in FIG. 3, an included angle is formed between the first planar bracket surface and the second planar bracket surface of the sensor bracket 40, and the included angle enables the probe of the speed sensor 10 to be oriented opposite the recess 302 in the first planar surface of the coupling 30. As such, by ensuring that the probe of the speed sensor 10 is oriented opposite the recess 302 in the first planar surface of the coupling 30, the accuracy of signal reception of the speed sensor 10 can be increased, thereby improving the accuracy of measurement of the rotating speed of the electric motor.

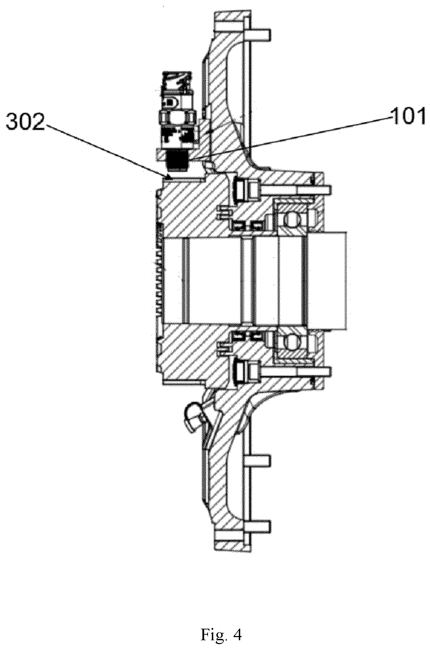

It will be readily appreciated that, in order to be able to further improve the accuracy of the speed sensor 10 in detecting the recess 302, the probe 101 of the speed sensor 10 should be aligned with the recess 302 in the first planar surface of the coupling 30 as far as possible, as shown in the cross-sectional view of FIG. 4. As such, the probe 101 of the speed sensor 10 is arranged to be aligned with the recess 302, so that when the coupling 30 is rotated, the sensor can generate different signals according to the change of the recess 302 and the planar surface of the coupling 30 in a more accurate and timely manner, thereby accurately determining the rotating speed of the electric motor.

The end cover 20 will be described in detail below.

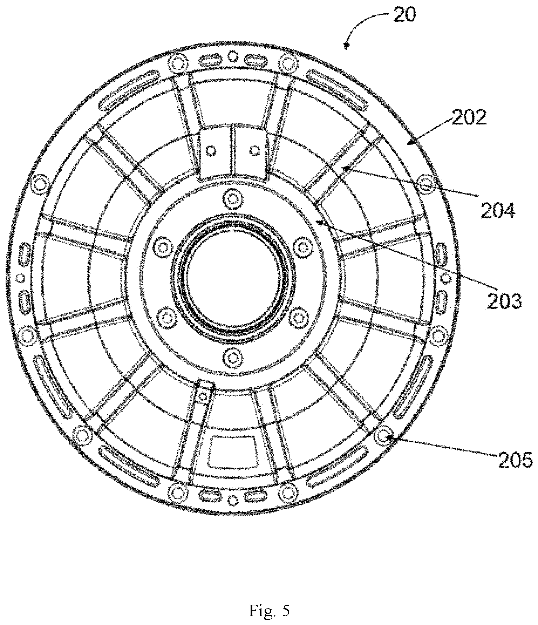

As shown in FIG. 5, the end cover 20 may include an outer ring 202 and an inner ring 203, the outer ring 202 and the inner ring 203 are connected by means of at least one connection shaft 204, and the sensor bracket 40 is fixed to the connection shaft 204 by means of the second threaded hole 402.

Obviously, the coupling 30 is mounted through the second connection hole 201 of the inner ring 203 of the end cover 20 when being mounted, and the second connection hole 201 of the inner ring 203 is required to ensure that the rotation of the coupling 30 will not be affected. The end cover 20 may has a surface configured in the shape of a hub, and the connection shaft 204 between the inner ring 203 and the outer ring 202 may be formed in an elongated shape or in a cylindrical shape, or may be formed as a planar surface, without specifically limiting the shape of the connection shaft 204 between the inner ring 203 and the outer ring 202.

In addition, at least one first fixing hole 205 for fixing the end cover 20 to the electric motor is distributed in the outer ring 202 of the end cover 20. Of course, the end cover 20 may be fixed to the electric motor in various ways. For example, the first fixing hole 205 may be a threaded hole, and the end cover is fixed by means of a bolt or a screw. For another example, the first fixing hole 205 may also be a snap-fit member, and the end cover 20 is fixed to the electric motor by means of a snap-fit fixation. For yet another example, the first fixing holes 205 may also include both a threaded hole and a snap-fit member to further enhance the stability of the fixing between the end cover 20 and the electric motor.

The coupling 30 will be described in detail below.

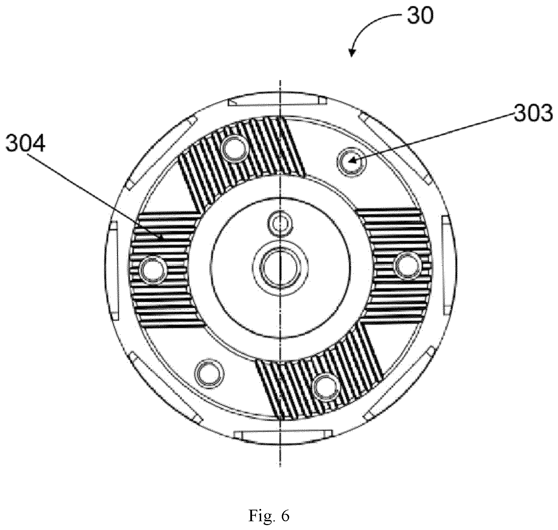

As shown in FIG. 6, a second planar surface of the coupling 30 includes at least one second fixing hole 303 for connecting the coupling 30 to an external load by means of the second fixing hole 303. In practical applications, the coupling 30 functions primarily as a connection, the coupling 30 is connected to the rotating shaft of the electric motor by means of the first connection hole 301, and a driving force of the electric motor is further transferred to the external load, such as external equipment that needs to be driven by the coupling 30 to operate, by means of the coupling 30. As such, the coupling is connected to the external load by means of the second fixing hole 303, so that when the electric motor rotates, the coupling 30 is driven to rotate, and the rotation of the coupling 30 in turns drives the external load to operate, thereby achieving the purpose of driving the external load to operate by the electric motor.

Of course, as shown in FIG. 6, the second planar surface of the coupling 30 may further include at least one toothed groove surface 304 to be coupled and fixed to a toothed groove surface 304 on the external load. It can be seen therefrom that in the present solution, the external load can be fixed not only by means of the fixing hole, but also by means of the coupling between toothed grooves, so that the mounting is more simple and convenient.

It will be readily appreciated that when the coupling 30 is fixed to the external load, only the second fixing hole 303 in the second planar surface, or only the toothed groove surface 304 in the second planar surface is used for fixing. The second planar surface may also include both the second fixing hole 303 and the toothed groove surface 304, that is, both the second fixing hole 303 and the toothed groove surface 304 are used for fixing.

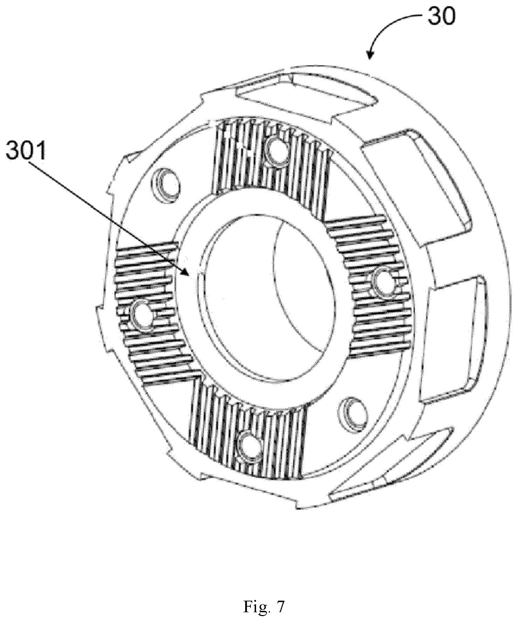

In addition, as shown in FIG. 7, an orifice of the first connection hole 301 of the coupling 30 is positioned in a tapered manner, so that it is more convenient to mount and remove the electric motor, the coupling 30, and the external load.

The rotating speed of the electric motor is determined by the signal change caused by the transformation between the recess 302 and the planar surface when the sensor detects. For example, when the sensor probe 101 detects a projection portion, a higher voltage signal is generated, and when the sensor probe 101 detects a recess 302 portion, a lower voltage signal is generated. The rotating speed of the electric motor is thus determined.

In a possible implementation, in order to further amplify the difference between the signals generated by a projection and the recess 302, it is contemplated that a material of the recess 302 in the first planar surface of the coupling 30 is selected as a high magnetic permeability material, and that a material of the projection portion is selected as a low magnetic permeability material. As such, the influence of the projection and the recess 302 on the signals is further enhanced by using different magnetic materials, thereby amplifying the difference between the signals generated by the projection and the recess 302, and thus improving the accuracy of measurement of the rotating speed of the electric motor by the speed sensor 10.

It needs to be noted that not all the modules in the flows and device structural diagrams described above are necessary, and some steps or modules may be omitted according to practical requirements. The execution order of the various steps is not fixed and may be adjusted according to requirements. The system structure described in the various embodiments above may be a physical structure and may also be a logical structure, i.e. some modules may be implemented by the same physical entity, or some modules may be implemented separately by multiple physical entities, or may be implemented together by some components in multiple independent devices.

In the foregoing embodiments, a hardware module may be implemented mechanically or electrically. For example, a hardware module may include a permanent dedicated circuit or logic (such as a dedicated processor, an FPGA or an ASIC) to accomplish a corresponding operation. The hardware module may also include a programmable logic or circuit (such as a general-purpose processor or other programmable processors), and may be set temporarily by software to accomplish a corresponding operation. The specific implementation (mechanical manner, or a dedicated permanent circuit, or a temporarily set circuit) may be determined in consideration of costs and time.

The present invention is illustrated and described in detail above by means of the accompanying drawings and preferred embodiments; however, the present invention is not limited to these disclosed embodiments. Based on the plurality of embodiments described above, those skilled in the art would know that code checking means in different embodiments above may be combined to obtain more embodiments of the present invention, and these embodiments also fall within the scope of protection of the present invention.

## Claims

1. A device for measuring a rotating speed of an electric motor, the device comprising:
a speed sensor (10);
an end cover (20); and
a coupling (30) having a first connection hole (301),
wherein a rotating shaft of the electric motor is connected to the coupling (30) by means of the first connection hole (301) so that the coupling (30) is driven by the electric motor to rotate,
wherein the end cover (20) is provided with a second connection hole (201), the coupling (30) passes through the second connection hole (201) of the end cover (20), the speed sensor (10) is arranged on the end cover (20), and a probe (101) of the speed sensor (10) is oriented opposite a first planar surface of the coupling (30), at least one recess (302) being distributed in the first planar surface of the coupling (30),
wherein the speed sensor (10) is used for detecting the recess (302) distributed in the first planar surface of the coupling (30) by means of the probe (101) to determine the rotating speed of the electric motor by a change of magnetic signals in the speed sensor (10).

2. The device according to claim 1, further comprising: a sensor bracket (40), wherein the sensor bracket (40) comprises a first planar bracket surface and a second planar bracket surface, the first planar bracket surface comprising at least one first threaded hole (401), and the second planar bracket surface comprising a second threaded hole (402),
wherein the sensor bracket (40) is fixed to the end cover (20) by means of the at least one first threaded hole (401), and
the speed sensor (10) is fixed to the sensor bracket (40) by means of the second threaded hole (402).

3. The device according to claim 2, wherein an included angle is formed between the first planar bracket surface and the second planar bracket surface, and the included angle enables the probe (101) of the sensor to be oriented opposite the recess (302) in the first planar surface of the coupling (30).

4. The device according to claim 2, wherein the end cover (20) further comprises an outer ring (203) and an inner ring (202), the outer ring (203) and the inner ring (202) being connected by means of at least one connection shaft (204),
wherein the sensor bracket (40) is fixed to the connection shaft (204) by means of the second threaded hole (402).

5. The device according to claim 4, wherein at least one first fixing hole (205) for fixing the end cover (20) to the electric motor is distributed in the outer ring (203) of the end cover (20).

6. The device according to claim 1, wherein a second planar surface of the coupling (30) comprises at least one second fixing hole (303), and the coupling (30) is connected to an external load by means of the second fixing hole (303), the external load being equipment that needs to be driven by the coupling (30) to operate.

7. The device according to claim 1, wherein a second planar surface of the coupling (30) comprises at least one toothed groove surface (304), and the toothed groove surface (304) is configured to be coupled and fixed to a toothed groove surface (304) on an external load, the external load being equipment that needs to be driven by the coupling (30) to operate.

8. The device according to claim 1, wherein an orifice of the first connection hole (301) is positioned in a tapered manner.

9. The device according to any one of claims 1 to 8, wherein a material of the recess (302) in the first planar surface of the coupling (30) comprises a high magnetic permeability material, and a material of a projection on the first planar surface comprises a low magnetic permeability material.
